# EUROPÄISCHE PATENTSCHRIFT

(11) **EP 1 321 025 B1**
(45) Veröffentlichungstag und Bekanntmachung des Hinweises auf die Patenterteilung: **14.02.2007**
(21) Anmeldenummer: 02102728.9
(22) Anmeldetag: 11.12.2002
(51) Int. Cl.: A01D 41/127

(54) **Erntemaschine mit Ernteguterfassungsvorrichtung**
Harvester machine with crop detection device
Machine de récolte avec dispositif de détection de végétaux

(30) Priorität: 18.12.2001 US 21581
(43) Veröffentlichungstag der Anmeldung: 25.06.2003
(73) Patentinhaber: DEERE & COMPANY, Moline, Illinois 61265-8098 (US)
(72) Erfinder: Coers, Bruce Alan, IL 61257, Hillsdale (US); Burke, Daniel James, IL 61242, Cordova (US)
(74) Vertreter: Holst, Sönke

(56) Entgegenhaltungen:
- EP-A- 0 077 667
- EP-A- 1 243 173
- AU-A- 2 613 902
- CA-A- 960 873
- DE-A- 1 407 720
- DE-A- 4 311 054
- DE-U- 20 001 144
- US-A- 3 606 742
- US-A- 4 337 611
- US-A- 4 487 002

## Beschreibung

Die Erfindung betrifft eine Erntemaschine nach dem Oberbegriff des Anspruchs 1.

Zahlreiche Funktionen moderner landwirtschaftlicher Mähdrescher werden derzeit automatisch gesteuert. Beispielsweise enthalten manche Mähdrescher Umsetzer, die die Menge des Materials erfassen, das in den Mähdrescher eintritt und einer Steuerung Signale bereitstellen, um die Geschwindigkeit des Mähdreschers als Reaktion auf Änderungen des Materials einzustellen, um einen im Wesentlichen konstanten Durchsatz aufrecht zu erhalten. Eine derartige Einrichtung ist in der EP 1 243 173 A beschrieben. Der Durchsatz kann verändert werden, wenn eine Erntequalitätsvariable, wie der Kornverlust oder Kornbeschädigungen, von einem gewünschten Qualitätszielbereich über eine ausgedehnte Zeitperiode abweicht. In einer anderen Patentschrift der vorliegenden Anmelderin (EP 1 281 310 A) steuert eine konventionelle Geschwindigkeitssteuerung die Erntemaschinengeschwindigkeit als Funktion der Ausgabe eines oder mehrerer Sensoren einschließlich eines Durchsatzsensors, der stromab des Erntevorsatzes angeordnet ist. Wenn der Erntevorsatz jedoch abgesenkt wird, wird die Geschwindigkeit des Mähdreschers bald abgesenkt, um einen plötzlichen Anstieg der Materialmenge stromab des Einlasses des Schrägförderers zu vermeiden.

Ein Problem mit diesen und ähnlichen Typen automatischer Steuerungen von Erntemaschinen ist der korrekte Arbeitsbeginn der automatischen Steuerungseinrichtung. Beispielsweise kann bei Mähdreschern mit Durchsatzsteuerung zu viel Erntegut in die Maschine eintreten und einen unstabilen Betrieb bewirken, wenn die selbsttätige Steuerung zu spät initiiert wird. Wenn die Initiierung zu früh ist, kann sowohl die Produktivität als auch die Betriebsstabilität beeinträchtigt sein. Ein einfacher und zuverlässiger Weg zum Initiieren eines automatischen Betriebs, um Durchsatzvariationen und Instabilität zu vermeiden, wäre wünschenswert.

Die DE 1 407 720 A beschreibt einen Mähdrescher mit einer unteren Schrägfördererwalze, die durch einlaufendes Erntegut angehoben wird und mit einem Ventil verbunden ist, das einen Hydraulikzylinder ansteuert, welcher wiederum die Position eines die Vortriebsgeschwindigkeit des Mähdreschers vorgebenden Variators verstellt, so dass man einen etwa konstanten Durchsatz des Mähdreschers erhält.

Die der Erfindung zu Grunde liegende Aufgabe wird darin gesehen, ein verbessertes System zur Betriebsaufnahme einer automatischen Steuerung einer landwirtschaftlichen Erntemaschine bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Erntemaschine ist mit einer Erntegutbearbeitungseinrichtung und einer automatischen Steuerung ausgestattet, die auf eine Erntegutverarbeitungsvariable reagiert, beispielsweise den Durchsatz und/oder Erntegutverluste, und eingerichtet ist, Arbeitsparameter der Erntemaschine selbsttätig einzustellen bzw. zu regeln. Der Steuerung werden durch Sensoren Informationen über die Erntegutverarbeitungsvariable zugeführt. Ihr können auch weitere Umgebungsparameter, wie die Bodenneigung, signalisiert werden. Um ein Anfangssignal für die automatische Steuerung bereitzustellen, ist eine Erfassungseinrichtung in einer Fördereinrichtung vorgesehen, die sich zwischen der Erntebergungsvorrichtung und dem Einlass der Erntegutbearbeitungseinrichtung befindet. Die Fördereinrichtung kann aktiv sein, d.h. mit einem angetriebenen Gutförderer ausgestattet, oder passiv; dann fühlt die Erfassungseinrichtung einen Förderkanal ab, durch den Erntegut mittels vor- und/oder nachgeordneter Förderer gefördert wird. Auf diese Weise wird der Eintritt von Erntegut in die Fördereinrichtung nachgewiesen und der Steuerung ein Startsignal bereitgestellt. Die Steuerung reagiert auf das Startsignal und beginnt dann mit der automatischen Steuerung, beispielsweise der Einstellung der Vortriebsgeschwindigkeit bzw. der Lageregelung des Erntevorsatzes. Zwischen dem Startsignal und dem Beginn der automatischen Steuerung kann eine bestimmte Verzögerung liegen, um beispielsweise die Zeit auszugleichen, die das Gut noch bis zum Erreichen der Gutbearbeitungseinrichtung benötigt. Solange die Erfassungseinrichtung jedoch kein Erntegut nachweist, greift die Steuerung vorzugsweise auf vorgegebene Einstellwerte für die Arbeitsparameter zurück.

Die Erfassungseinrichtung umfasst mindestens einen Schalter, z. B. einen Näherungsschalter, der auf die Bewegung einer Walze oder eines anderen Elements, beispielsweise eines federvorgespannten, in die Fördereinrichtung ragenden Fühlers reagiert, welche(s) durch in die Fördereinrichtung eintretendes Gut bewegt wird. Sobald sich die Walze beim Eintritt des Ernteguts nach oben (oder eine andere Richtung) bewegt, ändert sich der Zustand des Schalters. Die Steuerung erkennt die Änderung des Zustands als Hinweis, dass bald zu verarbeitendes Erntegut in die Erntegutbearbeitungseinrichtung eintreten wird und beginnt in Reaktion auf den Hinweis mit der automatischen Steuerung. Ein unnötiges Verlangsamen der Erntemaschine und eine verminderte Produktivität, die anderenfalls auftreten würden, können vermieden werden, wenn wenig oder kein Erntegut in der Fördereinrichtung vorhanden ist. Der Anfang des automatischen Steuerprozesses ist optimiert, so dass Erntegutverluste und Steuerungsinstabilitäten vermindert oder vermieden sind.

Die Erfassungseinrichtung wirkt, wie oben ausgeführt, mit einer Walze in einem Förderer zusammen, beispielsweise der höhenbeweglich unteren Walze eines Schrägförderers. Derartige Walzen sind zur Anpassung an die Gutart mit verstellbaren unteren Anschlägen ausgestattet. Es ist vorgesehen, die Erfassungseinrichtung an einem derartigen Anschlag anzubringen. Dadurch wird die Erfassungseinrichtung mit dem Anschlag verstellt und sie kann die Bewegung der Walze aus ihrer Ruhelage unproblematisch erfassen. Eine derartige Erfassungseinrichtung umfasst beispielsweise einen Näherungsschalter (z.B. Reed-Schalter) und einen Permanent- oder Elektro-Magneten. Dabei kann der Magnet an der Walze befestigt werden, während der Näherungsschalter am Anschlag angeordnet ist. Aber auch eine vertauschte Anordnung (Magnet am Anschlag, Näherungsschalter an der Walze) ist möglich.

In den Zeichnungen ist ein nachfolgend näher beschriebenes Ausführungsbeispiel der Erfindung dargestellt. Es zeigt:
- Fig. 1: eine Seitenansicht einer Erntemaschine,
- Fig. 2: ein Schema eines Steuerungssystems mit Durchsatzkontrolle für die Erntemaschine aus Figur 1,
- Fig. 3: eine seitliche perspektivische Ansicht eines Abschnitts des Schrägförderers der Erntemaschine aus Figur 1, in der ein einstellbarer Walzenanschlag mit einem Schalter gezeigt ist, der die Arbeitsaufnahme einer automatischen Steuerung ermöglicht,
- Fig. 4: eine vergrößerte Ansicht eines Abschnitts des Schrägförderers aus Figur 3, in der der am Anschlag angebrachte Schalter gezeigt wird,

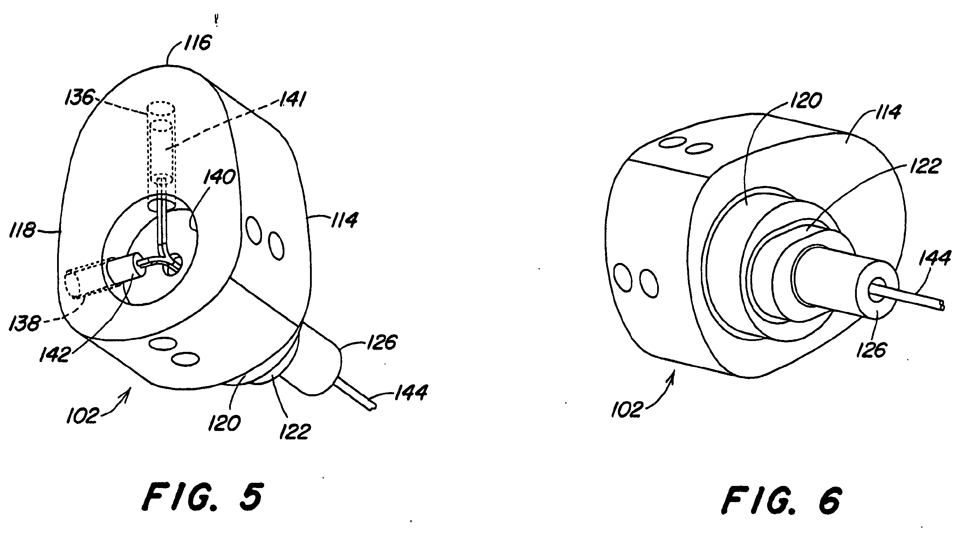

- Fig. 5: eine perspektivische walzenseitige Ansicht des Anschlags und des Schalters aus Figur 3, und
- Fig. 6: eine perspektivische Ansicht des Anschlags und des Schalters aus Figur 5, gesehen von der gegenüberliegenden oder nach außen gewandten Seite des Schalters.

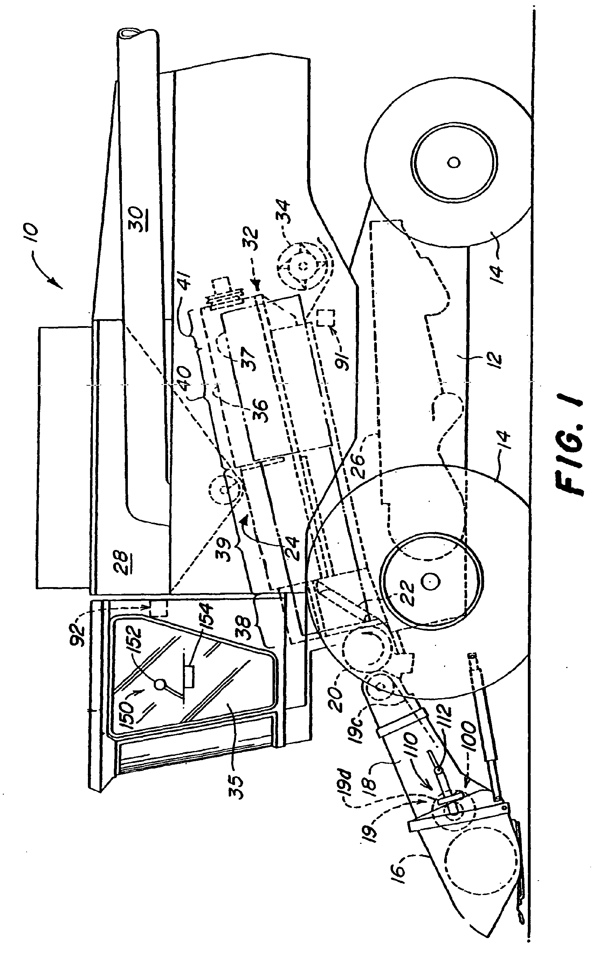

Es wird auf die Figur 1 Bezug genommen, in der eine landwirtschaftliche Erntemaschine in Form eines Mähdreschers 10 gezeigt ist, der eine tragende Struktur oder einen Rahmen 12 mit im Eingriff mit dem Erdboden stehenden Rädern 14 umfasst, die von der tragenden Struktur abstehen. Obwohl der Mähdrescher 10 mit Rädern dargestellt ist, könnte er auch mit zwei oder vier im Bodeneingriff befindlichen Gleisketten versehen sein. Ein Schneidwerk 16 wird zum Ernten von Erntegut und um es einem Schrägförderer 18 zuzuführen benutzt. Der Schrägförderer 18 enthält eine Fördereinrichtung 19, die um eine vordere Walze 19d herumgeführt ist, um das geerntete Gut einer Leittrommel 20 zuzuführen. Die Leittrommel 20 führt das Gut nach oben durch einen Einlassübergangsabschnitt 22 hindurch und einem drehbaren Dresch- und Trennzusammenbau 24 zu. Obwohl der dargestellte Dresch- und Trennzusammenbau 24 axial im Mähdrescher 10 angeordnet ist, könnte er in anderen Orientierungen relativ zur Längsachse des Mähdreschers 10 angeordnet sein. Obwohl die vorliegende Erfindung anhand eines Dresch- und Trennzusammenbaus 24 mit einem Rotor beschrieben wird, könnte sie auch an einem Feldhäcksler, einer Ballenpresse oder einem Mähdrescher 10 mit einer konventionellen, quer angeordneten Dreschtrommel, die mit einem Dreschkorb zusammenwirkt, verwendet werden.

Der drehbare Dresch- und Trennzusammenbau 24 drischt und trennt das geerntete Gut. Das Korn und die Spreu fallen durch Roste am Boden des Zusammenbaus 24 in ein Reinigungssystem 26. Das Reinigungssystem 26 entfernt die Spreu und führt das saubere Korn einem (nicht gezeigten) Elevator für sauberes Korn zu. Der Elevator für sauberes Korn legt das Korn in einem Korntank 28 ab. Das saubere Korn im Korntank 28 kann durch einen Entladeschneckenförderer 30 auf einen Lastwagen oder Anhänger entladen werden.

Ausgedroschenes, vom Korn befreites Stroh wird von dem Dresch- und Trennzusammenbau 24 durch einen Auslass 32 einer Auswurftrommel 34 zugeführt. Die Auswurftrommel 34 stößt das Stroh wiederum an der Rückseite des Mähdreschers 10 aus. Es ist anzumerken, dass die Auswurftrommel 34 das vom Korn befreite Gut auch direkt einem Strohhäcksler zuführen könnte. Der Betrieb des Mähdreschers 10 wird von einer Bedienerkabine 35 aus gesteuert.

Der drehbare Dresch- und Trennzusammenbau 24 umfasst ein zylindrisches Rotorgehäuse 36 und einen im Rotorgehäuse 36 angeordneten, drehbaren Rotor 37. Der vordere Teil des Rotors 37 und das Rotorgehäuse 36 definieren einen Beschickungsabschnitt 38. Stromab des Beschickungsabschnitts 38 sind ein Dreschabschnitt 39, ein Trennabschnitt 40 und ein Auslassabschnitt 41. Der Rotor 37 ist im Beschickungsabschnitt 38 mit einer konischen Rotortrommel versehen, die wendelförmige Beschickungselemente zum Eingreifen in Gut aufweist, das sie von der Leittrommel 20 und vom Einlassübergangsbereich 22 erhält. Unmittelbar stromab des Beschickungsabschnitts 38 befindet sich der Dreschabschnitt 39. Im Dreschabschnitt 39 weist der Rotor 37 eine zylindrische Rotortrommel auf, die mit einer Anzahl von Dreschelementen versehen ist, um das vom Beschickungsabschnitt 38 erhaltene Gut zu dreschen. Stromab des Dreschabschnitts 39 befindet sich der Trennabschnitt 40, in dem das im gedroschenen Gut gefangene Korn freigesetzt wird und durch einen bodenseitigen Rost im Rotorgehäuse 36 hindurch in das Reinigungssystem 28 fällt. Der Trennabschnitt 40 geht in den Auslassabschnitt 41 über, in dem das vom Korn verschiedene Gut von der Gutbearbeitungseinrichtung 24 ausgestoßen wird.

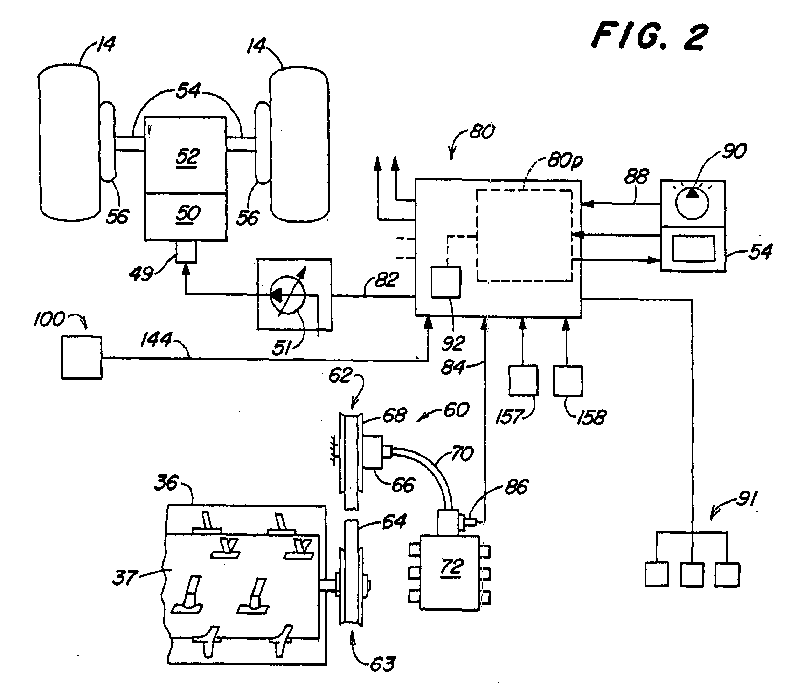

Die vorderen Räder 14 des Mähdreschers 10 werden durch einen hydrostatischen Motor 49 angetrieben, der mit einem hydrostatischen Getriebe 50 (Figur 2) verbunden ist. Der Motor 49 wird auf konventionelle Weise durch eine motorgetriebene hydrostatische Pumpe 51 angetrieben. Die Pumpe 51 ist mit einstellbaren Taumelplatten ausgestattet, die die Ausgangsgeschwindigkeit und Drehrichtung des Getriebes 50 steuern. Elektromagnetische Steuerventile steuern die Positionen der Taumelplatten. Das hydrostatische Getriebe 50 treibt ein Schaltgetriebe 52 an, und zwei treibende Wellen 54 erstrecken sich vom Schaltgetriebe 52 nach außen und treiben Endantriebe 56 der vorderen Räder 14 an. Die lenkbaren hinteren Räder 14 können ebenfalls durch Radmotore angetrieben werden, die direkt an den Rädern befestigt sind. Die Geschwindigkeit der Radmotore kann durch das unten beschriebene Durchsatzsteuerungssystem gesteuert werden.

Ein verstellbarer Antrieb 60 mit variablem Drehmoment und Fühler treibt den Rotor 37 an. Derselbe Verbrennungsmotor, der auch das hydrostatische Getriebe 50 antreibt, treibt auch den verstellbaren Antrieb 60 an. Der verstellbare Antrieb 60 umfasst eine antreibende Riemenscheibe 62 mit variablem Durchmesser und eine angetriebene Riemenscheibe 63 mit variablem Durchmesser. Ein Riemen 64 erstreckt sich zwischen der antreibenden Riemenscheibe 62 und der angetriebenen Riemenscheibe 63, um Rotationsleistung auf den Rotor 37 zu übertragen. Ein Hydraulikzylinder 66 steuert den Durchmesser der antreibenden Riemenscheibe 62, und die angetriebene Riemenscheibe ist federvorgespannt, um die Spannung des Riemens 64 aufrechtzuerhalten. Der Hydraulikzylinder 66 ist mit der antreibenden Riemenscheibe 62 gekoppelt und bewegt die Stirnplatten 68 der Riemenscheibe 62 nach innen bzw. außen, um den wirksamen Durchmesser der Riemenscheibe 62 gegenüber dem Riemen 64 zu steuern. Durch eine Änderung des wirksamen Durchmessers der Riemenscheibe 62 wird die effektive Geschwindigkeit der angetriebenen Riemenscheibe 63 geändert. Durch eine Hydraulikleitung 70 wird dem Hydraulikzylinder 66 unter Druck stehende Hydraulikflüssigkeit von einem Ventilzusammenbau 72 zugeführt. Der Rotor 37 wird durch die Riemenscheiben 62, 63 variablen Durchmessers mit einer konstanten, ausgewählten Rotorgeschwindigkeit angetrieben. Das vom Riemen 64 und den Riemenscheiben 62, 63 übertragene Drehmoment variiert mit dem Gutdurchsatz.

Eine elektronische Steuerung 80 steuert die Erntegeschwindigkeit des Mähdreschers 10, indem sie die elektromagnetisch betätigten Steuerventile der hydrostatischen Pumpe 51 über die Leitung 82 steuert, um die Position der Taumelplatten in der Pumpe 51 einzustellen. Die Steuerung 80 empfängt durch die Leitung 84 ein aktuelles Hydraulikdrucksignal oder den Druck des Aktors des variablen Rotorantriebs von einem Hydraulikdrucksensor 86. Der Druck des Aktors des variablen Rotorantriebs ist eine Funktion der Zuführrate, und die Zuführrate tendiert dahin, bei konstantem Druck des Aktors des variablen Rotorantriebs im Wesentlichen konstant zu sein. Indem somit die Erntegeschwindigkeit derart gesteuert wird, dass ein vorbestimmter Druck des Aktors des variablen Rotorantriebs aufrechterhalten wird, bleibt der Durchsatz im Wesentlichen konstant. Der Hydraulikdrucksensor 86 erfasst den Hydraulikdruck des Hydraulikzylinders 66, der den variablen Antrieb 60 mit Fühler verstellt. Der Hydraulikdruck im variablen Antrieb 60 mit Sensor steht mit dem Durchsatz in Beziehung, der wiederum Erntequalitätsvariablen, wie Kornverlust, Kornbeschädigung und Fremdanteil im Korn beeinflusst.

Die Steuerung 80 empfängt über eine Leitung 88 von einer Bedienersteuerung 90 in der Kabine 35 oder ein anderes Eingabegerät eine Signaleingabe über ein gewünschtes Erntequalitätsniveau, wie eine annehmbare Kornverlustrate. Ein Erntequalitätsumsetzer 91, der in Figur 1 als nahe dem Auslass 32 angeordneter Kornverlustsensor gezeigt ist, stellt der Steuerung 80 Erntequalitätssignale bereit. Ein Erntemaschinenneigungssensor oder Umsetzer 92 ist an einer geeigneten Stelle des Rahmens 12 (Figur 1) abgestützt und stellt der Steuerung 80 Signale bereit, die auf den Betrag hinweisen, um den sich die Erntemaschine aus einer im Wesentlichen ebenen oder horizontalen Position, die in Figur 1 gezeigt ist, hinausneigt. Der Umsetzer 92 stellt vorzugsweise der Steuerung 80 Information über den seitlichen Neigungswinkel und den Neigungswinkel in Fahrtrichtung bereit. Wie in Figur 2 gezeigt ist, ist der Umsetzer direkt in die Platine der Steuerung 80 integriert, um den Aufwand für einen externen Sensor, ein separates Gehäuse und eine Verkabelung zu vermeiden.

Um ein Startsignal für die automatische Steuerung bereitzustellen, ist eine Erfassungseinrichtung 100 zur Signalisierung des Vorhandenseins von Erntegut zwischen dem Schneidwerk 16 und dem Eingang des Dresch- und Trennzusammenbaus 24 angeordnet. Die Erfassungseinrichtung 100 reagiert auf Erntegut im Schrägförderer 18 und stellt der Steuerung 80 ein Startsignal bereit. Die Steuerung 80 reagiert auf das Startsignal, um mit der automatischen Steuerung anzufangen. Wie gezeigt, umfasst die Erfassungseinrichtung 100 Näherungsschalter, die auf die Bewegung der Walze 19d reagieren, die daher resultiert, dass Erntegut in den Schrägförderer 18 eintritt. Wenn sich die Walze 19d mit dem Ernteguteintritt nach oben bewegt, ändert der Schalter der Erfassungseinrichtung 100 seinen Zustand. Die Steuerung 80 erkennt die Änderung der Zustände als einen Hinweis darauf, dass zu verarbeitendes Erntegut bald in den Zusammenbau 24 eintreten wird.

Wie zeichnerisch dargestellt, ist die Erfassungseinrichtung 100 zur Signalisierung des Vorhandenseins von Erntegut an einem Abschnitt einer Walzenjustierungsstruktur angebracht, die insgesamt mit 110 gekennzeichnet ist. Die Walze 19d ist an ihren Enden von den Seiten des Schrägförderers 18 durch Verbindungsarme 112 mit verstellbarer Länge abgestützt, die Spannanker zur Einstellung der Spannung der Förderkette 10c des Schrägförderers 18 aufweisen. Die Förderkette 19c ist um die Walze 19d herumgeführt und bewegt Erntegut entlang des Bodens des Schrägförderers 18 nach hinten und oben zur Leittrommel 20. Die Verbindungsarme 112 erlauben der Walze 19d, sich beim Eintritt von Erntegut vertikal zu bewegen. Der ideale anfängliche Zwischenraum zwischen der Walze 19d und dem Boden des Schrägförderers 18 variiert bei verschiedenen Gutarten. Der optimale Zwischenraum wird beispielsweise bei kleinen Körnern kleiner sein als für Kolbenmais, und die Walzenjustierungsstruktur 110 stellt verschiedene untere Anschlaggrenzen bereit.

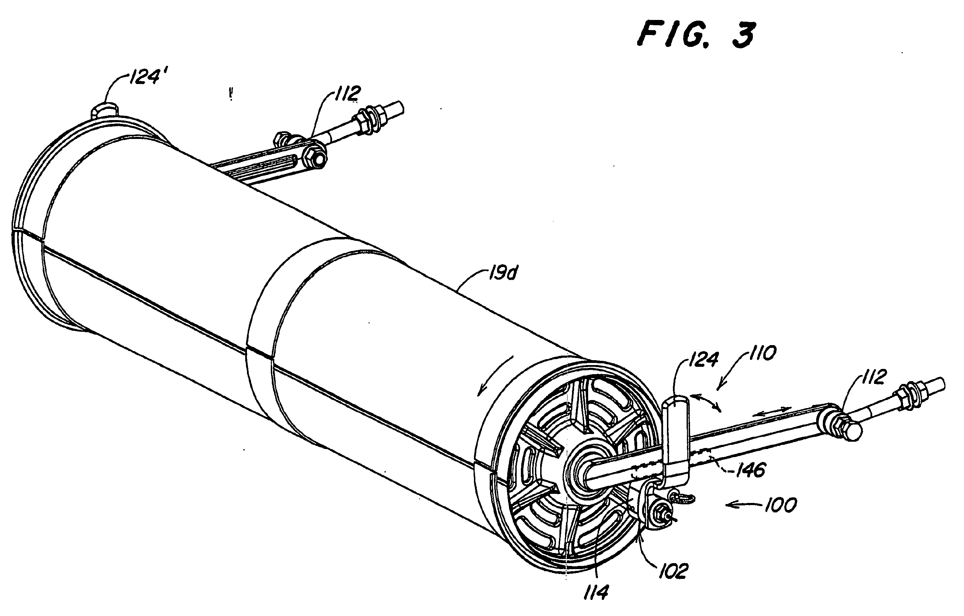

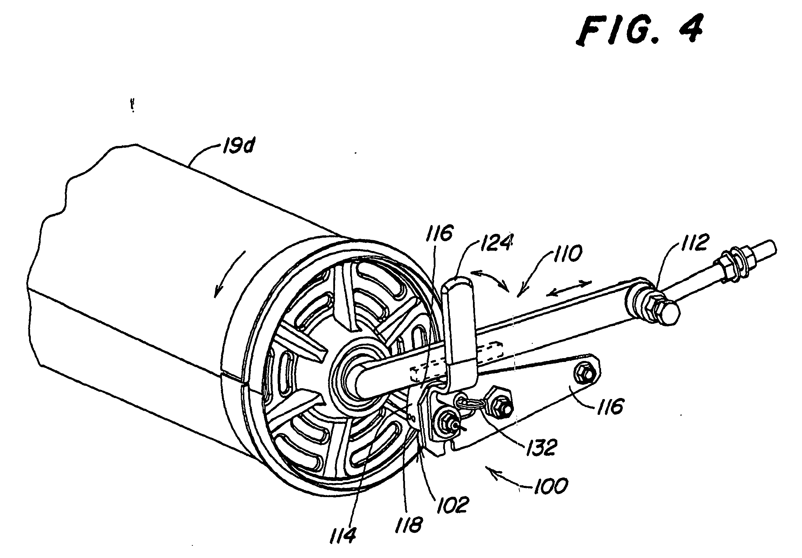

Die Walzenjustierungsstruktur 110 umfasst einen Nocken 114, der drehbar von einer Konsole 116 abgestützt wird, die an der Seitenwand des Schrägförderers 18 angeschraubt ist. Der Nocken 114 umfasst eine radial am weitesten außen angeordnete Überhöhung 116 und eine zweite Überhöhung 118, die gegenüber der Überhöhung 116 radial nach innen und um 90° versetzt ist. Die Überhöhung 116 erstreckt sich nach oben, um die Unterseite des Verbindungsarms 112 zu berühren, wenn die Struktur 110 auf Kolbenmais eingestellt ist. Die Überhöhung 118 erstreckt sich nach oben, um eine untere Anschlagsgrenze bereitzustellen, wenn die Struktur 110 auf anderes Erntegut als Kolbenmais eingestellt ist. Der Nocken 114 umfasst einen sich axial erstreckenden Lagerabschnitt 120, der innerhalb einer Öffnung der Konsole 116 drehbar aufgenommen ist. Ein nicht-kreisförmiger Abschnitt 122 erstreckt sich vom Lagerabschnitt 120 axial nach außen und nimmt einen Verstellhandgriff 124 auf, der eine passende Öffnung besitzt. Ein hohler, mit Gewinde versehener Abschnitt 126 erstreckt sich vom Abschnitt 122 axial nach außen, und ein Zusammenbau 128 mit Mutter und Unterlegscheibe ist auf den Abschnitt 126 gegen den Handgriff 124 geschraubt, um die Struktur 110 auf der Halterung 116 zu haltern. Die Winkelposition des Handgriffs 124 entspricht der Winkelposition der radial am weitesten außen angeordneten Überhöhung 116. Um den unteren Grenzanschlag der Walze 19d einzustellen, wird der Handgriff 124 zwischen der in den Figuren 3 und 4 gezeigten obersten Position, in der die Überhöhung 116 den Verbindungsarm 112 berührt und einer untersten Position (neunzig Grad im Uhrzeigersinn aus der in den Figuren 3 und 4 gezeigten Position) gedreht, in der die Überhöhung 118 den Verbindungsarm 112 berührt. Um den Handgriff 124 in der ausgewählten unteren Anschlagsposition zu sichern, wird ein Schnellanbringungsstift 132 in einer Öffnung im Handgriff 124 und in einem entsprechenden Schlitz in der Konsole 116 positioniert.

Der Nocken 114, der vorzugsweise aus Edelstahl hergestellt ist, umfasst zwei Bohrungen 136 und 138, die sich von einer zentralen Höhlung 140 im Wesentlichen radial auf die jeweiligen Überhöhungen 116 und 118 zu erstrecken. Magnetisch gesteuerte Reed-Schalter 141 und 142 sind innerhalb der Bohrungen 136 und 138 abgestützt und umfassen elektrische, in sie hineinführende Drähte 144, die sich axial durch den hohlen Abschnitt des Nocken 114 erstrecken und mit einem Eingang der Steuerung 80 verbunden sind. Ein langgestreckter Magnet 146 ist an der unteren, inneren Kante des Verbindungsarms 112 abgestützt, um den Reed-Schalter 141 oder 142 zu betätigten, wenn der Verbindungsarm 112 sich in der Anschlagsposition befindet und auf den Überhöhungen 116 bzw. 118 ruht. Der Magnet 146 erstreckt sich über eine hinreichende Länge des Verbindungsarms 112, um den Betrieb der Reed-Schalter 141, 142 über den gesamten Verstellbereich des Verbindungsarms 112 sicherzustellen.

Eine in der Bedienerkabine 35 angeordnete Bedienerkonsole 150 umfasst konventionelle Bedienereingabeeinrichtungen einschließlich eines Hydroverschiebehebels 152 zur manuellen Steuerung des Geschwindigkeitsbereichs und der Ausgangsgeschwindigkeit des hydrostatischen Getriebes 50. Ein Bedienerschnittstellengerät 154 in der Bedienerkabine 35 erleichtert Eingaben von Informationen in ein Prozessorsystem 80p, um eine automatische Geschwindigkeitssteuerung und vielfältige andere Steuerfunktionen für den Mähdrescher 10 bereitzustellen. Ausgaben von verschiedenen an Bord befindlichen Sensoren 157 und Mikrocontrollern 158 werden von dem Bedienerschnittstellengerät 154 bereitgestellt. Der Bediener kann verschiedene Typen von Informationen über die Eingabeleitungen 88 und 154a eingeben, einschließlich der Gutart, des Orts, der Ausbeute, des akzeptablen Kornverlusts, Beschädigungen, Fremdanteil und dergleichen.

Für den Betrieb des Mähdreschers 10 wird der Steuerung 80 eine gewünschte Erntequalitätsvariable, wie Verlustrate, unter Verwendung der Bedienereingabeeinrichtung 90 zugeführt. Basierend auf anfänglichen Voreinstellungseinträgen oder auf gelernten Zusammenhängen berechnet die Steuerung 80 einen anfänglichen Zieldruck des Aktors des variablen Rotorantriebs entsprechend der Einstellung der Bedienereingabeeinrichtung 90. Wenn eine automatische Steuerung gewünscht wird, wählt der Bediener die automatische Steuerfunktion durch einen Schalter in der Bedienerkonsole 150 aus. Wenn das Schneidwerk 16 oder ein anderes Erntebergungsgerät am Mähdrescher 10 Erntegut aufnimmt und es in den Schrägförderer 18 bewegt, hebt die Walze 19d von dem Nocken 114 ab und ändert den Zustand der Reed-Schalter 141 bzw. 142 und stellt der Steuerung 80 ein Anfangssignal zum Starten des automatischen Betriebs bereit.

Die Steuerung 80 empfängt das aktuelle Drucksignal vom Hydraulikdruckumsetzer 86 und ein aktuelles Verlustratensignal oder ein anderes Erntequalitätssignal vom Erntequalitätsumsetzer 91 und reguliert die Vorwärtsgeschwindigkeit des Mähdreschers 10, so dass sich der Druck des Aktors des variablen Rotorantriebs auf das anfängliche Zielniveau einstellt. Die Steuerung 80 fragt den Erntequalitätsumsetzer 91 ab und stellt fest, ob sich die Verlustrate für den anfänglichen Zielwert des Druck des Aktors bei dem gewünschten Niveau befindet, während der Mähdrescher bei ebenen Bedingungen arbeitet. Wenn die Verlustrate über einen ausgedehnten Zeitraum größer ist, als sie von der Steuerung 80 für den anfänglichen Zielwert des Drucks des Aktors bestimmt wurde, wird der Zieldruck des Aktors in der Weise nach und nach vermindert, dass die Vortriebsgeschwindigkeit des Mähdreschers vermindert wird, bis die gewünschte Verlustrate erreicht ist, und ein neuer Zielwert des Drucks des Aktors wird festgelegt. Wenn die Verlustrate über einen ausgedehnten Zeitraum kleiner ist als die eingegebene Rate, wird der Zieldruck des Aktors dadurch nach und nach vergrößert, dass die Vortriebsgeschwindigkeit des Mähdreschers erhöht wird, bis die gewünschte Verlustrate erreicht ist. Die Steuerung 80 aktualisiert den Zieldruck des Aktors für den Betrieb in der Ebene während des Erntens kontinuierlich, um sich ändernde Bedingungen zu kompensieren.

Wenn sich der Mähdrescher 10 aus der nivellierten Lage neigt und die Steuerung 80 ein Neigungssignal vom Neigungssensor 92 erhält, wird die Steuerung 80 den Mähdrescher 10 verlangsamen, um den Durchsatz zu vermindern und dadurch einen Anstieg der Erntequalitätsvariablen zu vermeiden. Durch eine Überwachung des Signals vom Gerät 100 kann das Verlangsamen des Mähdreschers 10 verschoben oder hinausgezögert werden, falls das Signal darauf hinweist, dass nur wenig oder kein Erntegut im Schrägförderer 18 vorhanden ist.

Der Prozessor 80p speichert oder berechnet eine Information über die erwarteten Qualitätsvariablen als Funktion der Neigungswinkel und des Durchsatzes. Für einen gegebenen Neigungswinkel kann daher der Zielwert des Drucks des Aktors verändert werden, um die Mähdreschergeschwindigkeit zu ändern, so dass die Qualitätsvariable im Wesentlichen konstant bleiben wird. Bei einer Ausführungsform der Erfindung lernt der Prozessor 80p den Zusammenhang zwischen der Neigung, der Erntequalität und dem Durchsatz und aktualisiert fortdauernd die gespeicherte Information, so dass Durchsatzeinstellungen schnell und genau durchgeführt werden können, sogar bei sich ändernden Erntegut- und Erntebedingungen.

Der Durchsatz wird gemessen als Funktion des Drucks des Aktors des variablen Rotorantriebs (Umsetzer 86) und bleibt fast konstant bei konstantem Druck des Aktors des variablen Rotorantriebs. Während des Betriebs des Mähdreschers wird der Druck des Aktors des variablen Rotorantriebs fortdauernd überwacht. Falls der Druck des Aktors des variablen Rotorantriebs vom gewünschten Bereich abweicht, wird die Geschwindigkeit des Mähdreschers 10 gesteigert oder vermindert, je nachdem, ob der Druck des Aktors des variablen Rotorantriebs unter oder über dem Zielniveau liegt. Außerdem wird der Neigungsumsetzer 92 abgefragt, um festzustellen, ob sich der Mähdrescher aus einer ebenen Lage herausneigt. Wenn eine Neigung des Mähdreschers 10 nachgewiesen wird, bestimmt der Prozessor 80p eine Beziehung zwischen den Verlusten, dem Druck des Aktors des variablen Rotorantriebs und der Neigung, um eine Korrelationsgleichung zu bestimmen oder im Speicher eine Karte der Beziehungen zwischen dem Verlust und dem Druck des Aktors des variablen Rotorantriebs als Funktion der Neigung abzulegen. Wenn eine Neigung der Maschine nachgewiesen wird und ein gesteigerter Verlust (oder eine andere Beeinträchtigung der Erntequalität) nachgewiesen wird, modifiziert der Prozessor 80p den Zielwert des Drucks des Aktors des variablen Rotorantriebs.

Dieser Prozess ermöglicht es der Steuerung 80, die Geschwindigkeit anzupassen, bis der Prozessor 80p den richtigen Zusammenhang zwischen Neigung, Verlusten und Druck des Aktors des variablen Rotorantriebs identifiziert und einen konstanten Verlust aufrechterhalten kann, indem er im selben Moment den Zielwert entsprechend des gelernten Zusammenhangs ändert.

Indem das Signal von der Erfassungseinrichtung 100 fortdauernd überwacht wird, können unnötige Verlangsamungen des Mähdreschers 10 und verminderte Produktivitäten vermieden werden, die anderenfalls auftreten würden, wenn der Prozessor 80p bestimmte Bedingungen erkennt, wenn nur wenig oder kein Erntegut an der Walze 19d des Schrägförderers 18 vorhanden ist. Der Beginn der automatischen Steuerung kann durch Überwachung des Signals der Reed-Schalter 141 und 142 optimiert werden, so dass Erntegutverluste und Steuerungsinstabilitäten vermindert oder vermieden werden.

## Patentansprüche

1. Erntemaschine, die zur Bewegung über ein Feld mit zu erntendem Gut eingerichtet und mit einer Erntegutbearbeitungseinrichtung (24) ausgestattet ist, der Erntegut durch eine Fördereinrichtung (19) zuführbar ist, wobei:
die Erntemaschine mit einer automatischen Steuerung (80) ausgestattet ist, die mit einer Erfassungseinrichtung (100) zur Erfassung von Erntegut in der Fördereinrichtung (19) verbunden ist und auf eine Erntegutverarbeitungsvariable reagiert,
die Steuerung (80) mit der automatischen Steuerung der Erntemaschine beginnt, sobald die Erfassungseinrichtung (100) das Vorhandensein von Erntegut nachweist,
die Fördereinrichtung (19) ein Gehäuse aufweist, in dem eine Walze (19d) beweglich angeordnet ist, die sich durch in das Gehäuse eintretendes Erntegut bewegt,
die Erfassungseinrichtung (100) die Bewegung der Walze (19d) erfasst,
eine Walzenjustierungsstruktur (110) zur Verstellung der Walze (19d) gegenüber dem Gehäuse vorhanden ist,
die Erfassungseinrichtung (100) von der Walzenjustierungsstruktur (110) abgestützt wird, **dadurch gekennzeichnet, dass** die Walzenjustierungsstruktur (110) einen drehbaren Nocken (114) umfasst, und dass die Erfassungseinrichtung (100) einen vom Nocken (114) abgestützten Näherungsschalter umfasst.

2. Erntemaschine nach Anspruch 1, **dadurch gekennzeichnet, dass** ein bewegbarer Verbindungsarm (112) die Walze (19d) abstützt, und dass ein zum Schalten des Näherungsschalters eingerichteter Magnet (146) am Verbindungsarm (112) befestigt ist.

3. Erntemaschine nach Anspruch 2, **dadurch gekennzeichnet, dass** der Nocken (114) einen Anschlag für den bewegbaren Verbindungsarm (112) umfasst.

4. Erntemaschine nach einem der Ansprüche 1 bis 3, **dadurch gekennzeichnet, dass** der Nocken (114) mit einem Verstellhandgriff (124) verbunden ist, um den Nocken (114) zu drehen und die Position des Anschlags zu ändern.

5. Erntemaschine nach einem der Ansprüche 1 bis 4, **dadurch gekennzeichnet, dass** die Steuerung (80) betreibbar ist, die Vortriebsgeschwindigkeit der Erntemaschine zur Steuerung des Durchsatzes zu verändern, und dass sie die Steuerung der Vortriebsgeschwindigkeit aufnimmt, wenn die Erfassungseinrichtung (100) den Eintritt von Erntegut in die Fördereinrichtung (19) nachweist.

6. Erntemaschine nach einem der Ansprüche 1 bis 5, **dadurch gekennzeichnet, dass** die Erfassungseinrichtung (100) derart angeordnet ist, dass sie den Eintritt von Erntegut in die Fördereinrichtung (19) schon erfasst und der Steuerung (80) ein entsprechendes Signal zuführt, bevor das Erntegut in die Erntegutbearbeitungseinrichtung (24) eintritt.

## Claims

1. Harvester which is set up to move across a field with crop to be harvested and is equipped with a crop processing device (24), to which crop can be supplied by a conveying device (19), wherein:
the harvester is equipped with an automatic control unit (80) which is connected to a detection device (100) for detecting crop in the conveying device (19) and reacts to a crop processing variable,
the control unit (80) begins with automatic control of the harvester as soon as the detection device (100) detects the presence of crop,
the conveying device (19) has a housing in which a roller (19d) is disposed movably and moves through crop entering the housing,
the detection device (100) detects the movement of the roller (19d),
a roller adjustment structure (110) is present for adjusting the roller (19d) relative to the housing,
the detection device (100) is supported by the roller adjustment structure (110), **characterised in that** the roller adjustment structure (110) comprises a rotatable cam (114), and **in that** the detection device (100) comprises an approach switch supported by the cam (114).

2. Harvester according to claim 1, **characterised in that** a movable connection arm (112) supports the roller (19d), and **in that** a magnet (146) which is set up to switch the approach switch is mounted on the connection arm (112).

3. Harvester according to claim 2, **characterised in that** the cam (114) comprises a stop member for the movable connection arm (112).

4. Harvester according to one of the claims 1 to 3, **characterised in that** the cam (114) is connected to a variable handle (124) in order to rotate the cam (114) and to change the position of the stop member.

5. Harvester according to one of the claims 1 to 4, **characterised in that** the control unit (80) can be operated to change the speed of advance of the harvester in order to control the throughput, and **in that** it assumes control of the speed of advance when the detection device (100) indicates the entry of crop into the conveying device (19).

6. Harvester according to one of the claims 1 to 5, **characterised in that** the detection device (100) is disposed in such a manner that it already detects the entry of crop into the conveying device (19) and supplies a corresponding signal to the control unit (80) before the crop enters the crop processing device (24).

## Revendications

1. Machine de récolte, qui est conçue pour se déplacer sur un champ avec les végétaux à récolter et est équipée d'un dispositif de traitement des végétaux (24), vers lequel les végétaux récoltés peuvent être transférés par l'intermédiaire d'un convoyeur (19), sachant que :
la machine de récolte est équipée d'une commande (80) automatique, qui est reliée à un dispositif de détection (100) destiné à détecter les végétaux dans le convoyeur (19) et qui réagit à une variable de traitement des végétaux,
la commande (80) commence le processus de commande automatique de la machine de récolte dès que le dispositif de détection (100) a détecté la présence de végétaux,
le convoyeur (19) comporte un carter, dans lequel est monté mobile un cylindre (19d), qui se déplace à travers les végétaux entrant dans le carter,
le dispositif de détection (100) enregistre le mouvement du cylindre (19d),
une structure d'ajustement (110), destinée à régler le cylindre (19d) par rapport au carter, est prévue,
le dispositif de détection (100) est supporté par la structure d'ajustement (110),
**caractérisée**
**en ce que** la structure d'ajustement (110) comporte une came (114) rotative,
et **en ce que** le dispositif de détection (100) comporte un capteur de proximité supporté par la came (114).

2. Machine de récolte selon la revendication 1, **caractérisée en ce qu'**un bras de liaison (112) mobile supporte le cylindre (19d) et **en ce qu'**un aimant (146), conçu pour activer le capteur de proximité, est fixé sur le bras de liaison (112).

3. Machine de récolte selon la revendication 2, **caractérisée en ce que** la came (114) comporte une butée pour le bras de liaison (112) mobile.

4. Machine de récolte selon l'une quelconque des revendications 1 à 3, **caractérisée en ce que** la came (114) est reliée à une manette de réglage (124), pour faire tourner la came (114) et modifier la position de la butée.

5. Machine de récolte selon l'une quelconque des revendications 1 à 4, **caractérisée en ce que** la commande (80) peut être utilisée pour faire varier la vitesse d'avance de la machine de récolte en vue de commander le rendement, et **en ce qu'**elle accepte la commande de la vitesse d'avance lorsque le dispositif de détection (100) détecte l'admission des végétaux récoltés dans le convoyeur (19).

6. Machine de récolte selon l'une quelconque des revendications 1 à 5, **caractérisée en ce que** le dispositif de détection (100) est disposé de telle sorte qu'il détecte l'admission des végétaux récoltés dans le convoyeur (19) et transmet un signal correspondant à la commande (80), déjà avant que les végétaux récoltés n'entrent dans le dispositif de traitement des végétaux (24).
